# NEUE EUROPÄISCHE PATENTSCHRIFT

(11) **EP 2 188 438 B2**
(45) Veröffentlichungstag und Bekanntmachung des Hinweises auf die Entscheidung über den Einspruch: **31.10.2018**
(45) Hinweis auf die Patenterteilung: 06.06.2012
(21) Anmeldenummer: 08772589.1
(22) Anmeldetag: 18.07.2008
(51) Int. Cl.: D06N 3/00, D06M 15/227, B29C 65/00, D06N 3/04, B65D 33/22, B65D 30/04, B32B 27/12, B65D 75/12, F02F 1/24, F02F 1/40

(54) **VERFAHREN ZUM VERBINDEN BESCHICHTETER GEWEBEN AUS MONOAXIAL VERSTRECKTEN KUNSTSTOFFBÄNDCHEN MIT DIESEM VERFAHREN**
PROCESS FOR BONDING COATED FABRICS FROM MONOAXIALLY DRAWN PLASTIC TAPES
PROCEDE POUR LIER DES TISSUS REVETUS EN BANDELETTES DE MATIERE PLASTIQUE MONO-ORIENTEES

(30) Priorität: 10.09.2007 AT 5372007
(43) Veröffentlichungstag der Anmeldung: 26.05.2010
(73) Patentinhaber: STARLINGER & CO. GESELLSCHAFT MBH, 1060 Wien (AT)
(72) Erfinder: FÜRST, Herbert, A-2564 Weissenbach/Triesting (AT); SKOPEK, Peter, A-3400 Klosterneuburg (AT)
(74) Vertreter: Vögele, Andreas
(86) Internationale Anmeldenummer: PCT/AT2008/000262
(87) Internationale Veröffentlichungsnummer: WO 2009/033196

(56) Entgegenhaltungen:
- EP-A- 0 769 585
- WO-A-01/05671
- WO-A-95/30598
- WO-A1-01/05671
- AT-B- 388 896
- DE-A1- 2 027 060
- DE-A1- 3 236 770
- US-A- 3 294 616
- US-A- 3 535 184
- US-A- 4 373 979
- US-A- 5 462 807
- US-B1- 6 716 499
- Carlowitz, Bodo: "Kunststoff-Tabellen, 4. Auflage", 1995, Carl Hanser Verlag, München ISBN: 3-446-17603-9 * Seiten 4, 5, 14, 15, 22-25, 30, 31, 40, 41 *
- Datasheet von FABRENE T712W8F8
- JONES I.A. ET AL: 'Novel joining methods applicable to textiles and smart garments' WEARABLE FUTURES CONFERENCE September 2005,
- Wikipedia: "Polyethylene" (http://de.wikipedia.org/w/index.php?oldid= 113305673
- Carlowitz, Bodo: "Kunststoff-Tabellen", ISBN: 3-446-17603-9

## Beschreibung

Die Erfindung betrifft ein ein Verfahren zum Verbinden von beschichteten Geweben, gemäß dem Oberbegriff des Anspruchs 1.

Gewebe aus monoaxial verstreckten Kunststoffbändchen haben in der Verpackungsindustrie vielfache Anwendungen gefunden, beispielsweise zur Herstellung von Verpackungssäcken. Solche Verpackungssäcke, die als Kastensäcke ausgeformt sind, sind z.B. aus dem Dokument WO 95/30598 A1 bekannt. Das Gewebe besteht dabei aus monoaxial verstreckten Polymerbändchen, im speziellen Polyolefin-, vorzugsweise Polypropylenbändchen, wobei das Gewebe an einer oder beiden Oberflächen mit einem thermoplastischen Kunststoff, insbesondere Polyolefin, beschichtet sein kann. Das Gewebe ist entweder ein auf einer Rundwebmaschine hergestelltes schlauchartiges Rundgewebe oder ein mittels einer Längsschweiß- oder -klebenaht zu einem Schlauch verbundenes Flachgewebe.

Unter Verwendung des oben beschriebenen Gewebes aus monoaxial verstreckten Kunststoffbändchen als Sackkörper wird gemäß der WO 95/30598 A1 ein Sack hergestellt, indem mindestens ein Ende des Sackkörpers durch Falten der Gewebeenden zu einer rechteckigen Bodenfläche ausgeformt wird, die über eine Zwischenschicht aus thermoplastischem Kunststoffmaterial, insbesondere Polyolefin bzw. Polypropylenmaterial, durch Wärmeeinwirkung mit einem Deckblatt aus Gewebe aus monoaxial verstreckten Polymerbändchen verbunden wird, wobei die Wärmeeinwirkung so erfolgt, dass weniger als 30% der Materialdicke der Gewebebändchen der Bodenfläche und des Deckblattes infolge der Wärmeeinwirkung desorientierte Polymermoleküle aufweisen, im übrigen Materialbereich die Molekülorientierung aber vorhanden bleibt. Anstelle eines gesonderten Deckblattes kann auch ein die Bodenfläche überlappender Faltlappen des Sackkörpergewebes als Deckblatt dienen.

Säcke aus einem solchen Gewebe, bei denen die obigen Bedingungen zur Verbindung der Bodenfläche mit dem Deckblatt eingehalten werden, haben sich seit mehr als einem Jahrzehnt millionenfach auf der ganzen Welt zur Verpackung von Schüttgütern jeglicher Art bewährt.

Als kritisch hat sich jedoch herausgestellt, dass nur bei exakter Einhaltung von Temperatur und Verarbeitungsgeschwindigkeit Schweißnähte herstellen lassen, die allen Festigkeitsanforderungen entsprechen.

Außerdem muss beim Verschweißen solcher Gewebe vermieden werden, die Kunststoffbändchen über deren Kristallit-Schmelzpunkt zu erwärmen. Grund dafür ist, dass unbeschichtetes oder einschichtig beschichtetes Gewebe beim Heizelement- oder Ultraschallschweißen im Nahtbereich die hohe Festigkeit verliert, weil die monoaxiale Orientierung der verstreckten Bändchen durch die notwendige Schweißtemperatur rückgängig gemacht wird.

EP 0 769 585 A2 zeigt ein beschichtetes Gewebe aus Polymerbändchen, wobei das Gewebe mit einem Elastomer beschichtet ist, dessen Glasübergangstemperatur T_{G} < -20°C beträgt. Bei den in der EP 0 769 585 A2 gezeigten beschichteten Geweben handelt es sich um LKW-Abdeckplanen. WO 01/05671 A1 beschäftigt sich mit einem Sack, der zwei Materialbahnen umfasst. Am Ende der Materialbahnen werden diese umgeschlagen und mittels eines Hotmeltklebers auf eine Seite der Materialbahn geklebt. DE 20 27 060 beschäftigt sich mit beschichtetem Gewebe zur Herstellung von Säkken. Die Verbindung solcher Gewebe wird in der DE 20 27 060 nicht offenbhart.

Der vorliegenden Erfindung liegt die Aufgabe zugrunde ein Verfahren zum Verbinden von beschichteten Geweben aus monoaxial verstreckten Kunststoffbändchen bereit zu stellen.

Die Erfindung löst die Aufgabe durch Bereitstellen eines Verfahrens mit den kennzeichnenden Merkmalen des Anspruchs 1. Vorteilhafte Ausgestaltungen der Erfindung sind in den Unteransprüchen dargelegt.

Gewebe aus monoaxial verstreckten Polymerbändchen, insbesondere Polyolefin-, oder Polyesterbändchen, vorzugsweise Polypropylen-, oder Polyethylenterephthalatbändchen mit einer Siegelschicht aus einem thermoplastischen Kunststoff beschichtet, dessen Schmelzpunkt unter dem Kristallit-Schmelzpunkt des Gewebebändchen-Materials liegt, eignet sich hervorragend zum Verschweißen, wobei die Wärmeeinwirkung nicht von der Seite der Siegelschicht erfolgen muss, sondern Wärme durch das Gewebe aus monoaxial verstreckten Polymerbändchen hindurch in die Siegelschicht eingebracht werden kann, mit der Maßgabe, dass das Gewebe aus monoaxial verstreckten Polymerbändchen nicht über den Kristallit-Schmelzpunkt des Gewebebändchen-Materials erwärmt wird. Die erzeugten Schweißnähte weisen eine hohe Festigkeit auf.

In dem Dokument WO 95/30598 sind auch beschichtete Ausführungsformen des Gewebes sowie ihrer Verbindung miteinander offenbart. So zeigt Fig. 9 eine Variante, bei der ein Deckblatt aus einem Bändchengewebe und eine Beschichtung aus Polyolefinen, z.B. Polypropylen, mit einem Sacklappen, bestehend aus einem Bändchengewebe und einer Beschichtung aus demselben Polyolefinmaterial miteinander verbunden werden sollen. Dazu werden die einander zugewandten Beschichtungsseiten bis in eine Eindringtiefe von 2-40 µm zur Plastifizierung erwärmt und zwischen zwei gekühlten Walzen durchgezogen, wobei die Schichten 3b, 4b miteinander verpresst werden. Das gekühlte Walzenpaar sorgt für die notwendige Abkühlung, damit das Bändchengewebe keine durch Wärme verursachte Beschädigung erfährt. Da die Erwärmung von der Beschichtungsseite erfolgt, wird auch hauptsächlich die Beschichtung erhitzt, und somit verlieren die Bändchen nur bis in eine geringe Tiefe die Orientierung ihrer Molekülketten. Die beschriebene Verschweißung durch Erhitzen einer Gewebebeschichtung kann auch dann durchgeführt werden, wenn nur eines der Gewebe beschichtet ist, wie in Fig. 12 von WO 95/30598 gezeigt. Dabei wird nicht beschichtetes Gewebe mit Gewebe, das eine Beschichtung aufweist, durch Wärmeverschweißung innig verbunden.

Es ist in der WO 95/30598 auch erwähnt, dass der Beschichtung des Gewebes, die aus thermoplastischem Kunststoff, insbesondere Polyolefinmaterial, besteht, ein Copolymer aus Ethylen und Vinylacetat beigemischt werden kann, das allgemein als EVA bekannt ist. Dieses EVA besitzt einen niedrigeren Schmelzpunkt als Polyethylen. Durch Beigabe von EVA wird die Verschweißbarkeit der Beschichtung merklich verbessert. Nähere Angaben über den Anteil der Zugabe von EVA sowie Schmelzpunkte finden sich jedoch nicht in diesem Dokument. Insbesondere ist offensichtlich nicht daran gedacht, eine solche Menge an EVA zuzugeben, dass der Schmelzpunkt der Beschichtung unter dem Kristallit-Schmelzpunkt des Gewebebändchen-Materials liegt, denn nur in diesem Fall könnte auch eine Verschweißung von der Gewebeseite her erfolgen, die in der WO 95/30598 nicht einmal angedacht wird.

Ein Problem, das sich beim Vorsehen der Siegelschicht auf dem Gewebe aus monoaxial verstreckten Polymerbändchen gemäß der Erfindung ergibt, ist, dass diese Siegelschicht meist auf dem Gewebe aus monoaxial verstreckten Polymerbändchen sehr schlecht anhaftet. Insbesondere haftet reines Polyethylen, das einen ausreichend niedrigen Schmelzpunkt aufweist, nicht auf Bändchen, die aus Polypropylen hergestellt sind. Um für die Siegelschicht nicht nur auf dem Markt zwar erhältliche Spezialmaterialien verwenden zu können, die sowohl ausreichende Haftung am Bändchenmaterial aufweisen, als auch einen ausreichend niedrigen Schmelzpunkt besitzen, ist in einer Ausführungsform der Erfindung vorgesehen, zwischen dem Gewebe aus monoaxial verstreckten Polymerbändchen und der Siegelschicht eine Haftschicht aus einem Polymermaterial mit guter Adhäsion zu sowohl dem Gewebe als auch der Siegelschicht anzuordnen. Für eine verbesserte Handhabbarkeit beim Verschweißen sollte die Haftschicht vorzugsweise einen Schmelzpunkt aufweisen, der über jenem der Siegelschicht liegt.

Große Freiheitsgrade bei der Einstellung der Prozessparameter für das Verschweißen bietet eine weitere Ausführungsform des erfindungsgemäßen beschichteten Gewebes, bei der das Gewebebändchen-Material einen Kristallit-Schmelzpunkt von mehr als 120°C aufweist.

Bei einer billigen, aber dennoch guten Ausführungsform des erfindungsgemäßen beschichteten Gewebes umfasst die Siegelschicht Polyethylen, das einen niedrigen Schmelzpunkt besitzt. Alternativ dazu ist die Siegelschicht als eine Spezial-Polymerschicht mit niedrigem Schmelzpunkt ausgeführt, z.B. aus dem von der Firma DuPont hergestellten Produkt Surlyn® 1652-E. Dieses Produkt ist zwar teurer als eine Polyethylenschicht, jedoch benötigt es keine Haftschicht, um auf dem Gewebe aus monoaxial verstreckten Polymerbändchen anzuhaften.

In einer bevorzugten Ausführungsform der Erfindung umfasst die Haftschicht Polypropylen, das sich sehr gut mit dem Bändchenmaterial verbindet. Dem Polypropylen kann dabei Polyethylen von bis zu 40 Volums-%, vorzugsweise von bis zu 20 Volums-% zugegeben werden.

Für die Verarbeitbarkeit und ausreichende Festigkeit des beschichteten Gewebes hat es sich als günstig erwiesen, wenn die verstreckten Polymerbändchen eine Dicke zwischen 20 µm und 80 µm aufweisen. Es ist weiters bevorzugt, dass die Siegelschicht und gegebenenfalls die Haftschicht jeweils eine Dicke zwischen 5 µm und 60 µm aufweisen.

Die Erfindung umfasst ein Verfahren zum Verbinden von erfindungsgemäßen beschichteten Geweben durch einen Schweißvorgang. Dabei werden zwei beschichtete Gewebe so übereinandergelegt, dass die Siegelschichten einander zugewandt sind. Zumindest eines der Gewebe wird von der Gewebeseite, d.h. von außen, auf eine Temperatur unter der Kristallit-Schmelztemperatur des Gewebebändchen-Materials erwärmt, und zwar für eine Zeitdauer bis zum Schmelzen der Siegelschichten, die sich beim Schmelzen miteinander verbinden. Die Verbindung der geschmolzenen Siegelschichten kann unter Druckausübung erfolgen, die entweder direkt von den Schweißelementen ausgeübt wird, oder von separaten Druckerzeugungsmitteln, wie einem Walzenpaar, das gleichzeitig gekühlt sein kann. Das Erwärmen kann dabei mittels eines Ultraschallaktuators erfolgen, d.h. durch Ultraschallschweißen, mittels eines Heizelements, d.h. durch Heizelementschweißen, mittels eines Infrarotstrahlers, d.h. durch Infrarotschweißen oder mittels eines Laserstrahlquelle, d.h. durch Laserstrahlschweißen.

Die Erfindung wird nun anhand nicht einschränkender Ausführungsbeispiele unter Bezugnahme auf die Zeichnungen näher erläutert. In den Zeichnungen zeigen:
Fig. 1 eine erste Ausführungsform eines beschichteten Gewebes im Querschnitt;
Fig. 2 eine zweite Ausführungsform eines beschichteten Gewebes im Querschnitt;
Fig. 3 eine schematische Darstellung eines erfindungsgemäßen Schweißverfahrens an zwei beschichteten Geweben;
Fig. 4 eine schematische Darstellung eines Heißluftschweißvorgangs an zwei Geweben:
Fig. 5 einen Sack aus beschichtetem Rundgewebe in der Perspektive; und
Fig. 6 einen Sack aus beschichtetem Flachgewebe mit Längsnaht

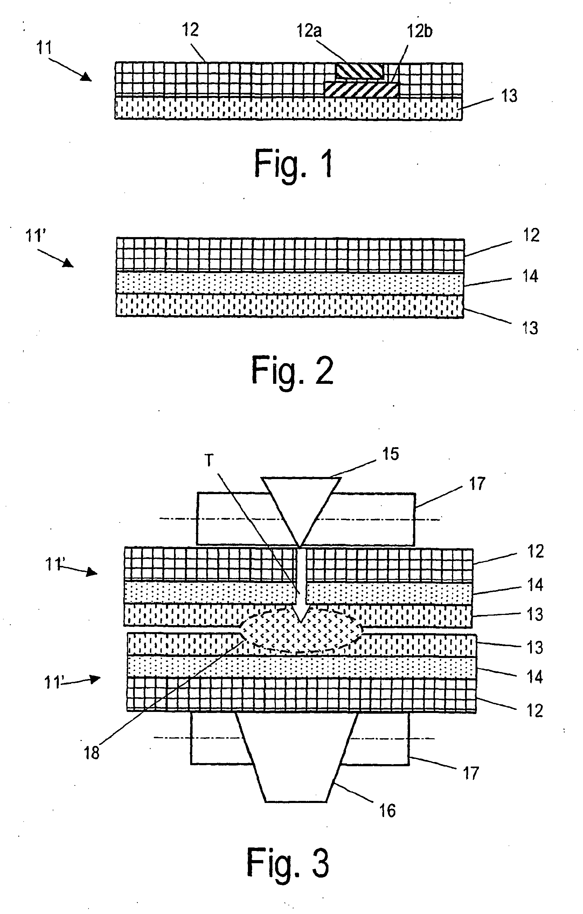

In Fig. 1 ist eine erste Ausführungsform eines beschichteten Gewebes 11 im Querschnitt dargestellt. Dieses beschichtete Gewebe 11 umfasst ein Gewebe 12 aus monoaxial verstreckten Polymerbändchen 12a, 12b, insbesondere Polyolefin- oder Polyesterbändchen, vorzugsweise Polypropylen- oder Polyethylenterephthalatbändchen. Die beispielhaft dargestellten Polymerbändchen 12a, 12b bilden Kette und Schuss des Gewebes 12. Das Bändchen-Gewebe 12 ist mit einer Siegelschicht 13 aus einem thermoplastischen Kunststoff beschichtet, dessen Schmelzpunkt unter dem Kristallit-Schmelzpunkt des Gewebebändchen-Materials liegt. Beispielsweise bestehen die Bändchen 12a, 12b aus Polypropylen, das typischerweise einen Kristallit-Schmelzpunkt über 160°C aufweist. Die Siegelschicht 13 umfasst in einer ersten Variante Polyethylen, dessen Schmelzpunkt bei ca. 105°C (LD-PE) liegt. Nachteilig an Polyethylen ist, dass es schlecht an Polypropylen anhaftet. Eine Möglichkeit, diesen Nachteil auszuschalten, ist in der unten anhand der Fig. 2 beschriebenen zweiten Ausführungsform eines beschichteten Gewebes dargelegt. Alternativ zu Polyethylen als Siegelschicht 13 eignen sich jedoch auch Spezial-Polymere, die einen niedrigen Schmelzpunkt aufweisen und gut an Polypropylen haften. Als geeignetes Spezial-Polymer hat sich z.B. das von der Firma DuPont hergestellte Produkt Surlyn® 1652-E erwiesen. Sein Schmelzpunkt liegt bei ca. 100°C.

In Fig. 2 ist eine zweite Ausführungsform eines beschichteten Gewebes 11' dargestellt, das ebenfalls ein Gewebe 12 aus monoaxial verstreckten Polymerbändchen, insbesondere Polyolefin- oder Polyesterbändchen, vorzugsweise Polypropylen- oder Polyethylenterephthalatbändchen sowie eine Siegelschicht 13 aus einem thermoplastischen Kunststoff aufweist, dessen Schmelzpunkt unter dem Kristallit-Schmelzpunkt des Gewebebändchen-Materials liegt. Die vorliegende Ausführungsform des beschichteten Gewebes 11' unterscheidet sich von der obigen ersten Ausführungsform nur dadurch, dass zwischen dem Gewebe 12 aus monoaxial verstreckten Polymerbändchen und der Siegelschicht 13 zusätzlich eine Haftschicht 14 aus einem Polymermaterial mit guter Adhäsion zu sowohl dem Gewebe 12 als auch der Siegelschicht 13 angeordnet ist. Vorzugsweise weist die Haftschicht 14 einen Schmelzpunkt auf, der über jenem der Siegelschicht 13 liegt. Vorzugsweise umfasst die Haftschicht 14 Polypropylen, dem Polyethylen von bis zu 40 Volums-%, vorzugsweise von bis zu 20 Volums-% zugemischt ist.

Die beschichteten Gewebe 11, 11' eignen sich hervorragend zum Verbinden durch Schweißen, wobei die erzeugte Schweißverbindung hohe Festigkeit aufweist. Sie sind somit besonders gut zur Verwendung bei der Herstellung von in der WO 95/30598 beschriebenen Säcken, insbesondere Kastensäcken oder Kastenventilsäcken geeignet. Im Gegensatz zu den in der WO 95/30598 offenbarten Geweben eignen sie sich aber auch sehr gut für das Ultraschallschweißen, Heizelementschweißen, Infrarotschweißen oder Laserstrahlschweißen. Mittels einem dieser Schweißverfahren kann beispielsweise ein Flachgewebe in Längsrichtung zu einem Rundgewebe verbunden werden. Ein anderer Anwendungsbereich der beschichteten Gewebe ist das Form, Fill and Seal (FFS) Verfahren.

Anhand der Fig. 3 wird nun schematisch das Miteinander-Verschweißen von zwei der in Fig. 2 dargestellten beschichteten Geweben 11' dargestellt. Zunächst werden die beiden beschichteten Gewebe 11', 11' so übereinandergelegt, dass ihre Siegelschichten 13, 13 einander zugewandt sind. Dann wird zumindest eines der beschichteten Gewebe 11', 11' von der Seite des Gewebes 12 aus monoaxial verstreckten Polymerbändchen, d.h. von außen, unter Verwendung zumindest eines Schweißelements 15, 16 auf eine Temperatur (Pfeil T), die unter der Kristallit-Schmelztemperatur des Gewebebändchen-Materials liegt, erwärmt. Die Wärmeeinbringung erfolgt so lange, bis die Siegelschichten 13 zum Schmelzen gebracht sind und sich dabei innig miteinander verbinden, wie durch den Bereich 18 strichliert angedeutet ist. Die Verbindung der geschmolzenen Siegelschichten 13, 13 erfolgt unter Druckausübung durch ein gekühltes Walzenpaar 17, 17. Die Druckausübung könnte aber auch direkt durch die Schweißelemente 15, 16 erfolgen. Zum besseren Verständnis sei angemerkt, dass die beiden beschichteten Gewebe 11', 11' während des Schweißvorgangs auch mit gleichförmiger Geschwindigkeit durch die Schweißelemente 15, 16 hindurchbewegt werden können, und zwar bezogen auf Fig. 3 aus der Zeichnungsebene heraus. Wenn der Schweißvorgang als Ultraschallschweißen ausgestaltet ist, so ist das Schweißelement 15 als Ultraschallaktuator ausgebildet, und das Schweißelement 16 als Gegenstück in Form eines Ambosses. Wenn der Schweißvorgang als Heizelementschweißen ausgestaltet ist, so ist das Schweißelement 15 als Heizelement ausgebildet, und das Schweißelement 16 entweder ebenfalls als Heizelement oder als Auflager. Wenn der Schweißvorgang als Infrarot- oder Laserstrahlschweißen ausgestaltet ist, so ist das Schweißelement 15 als Infrarotstrahler oder Laserstrahlquelle ausgebildet.

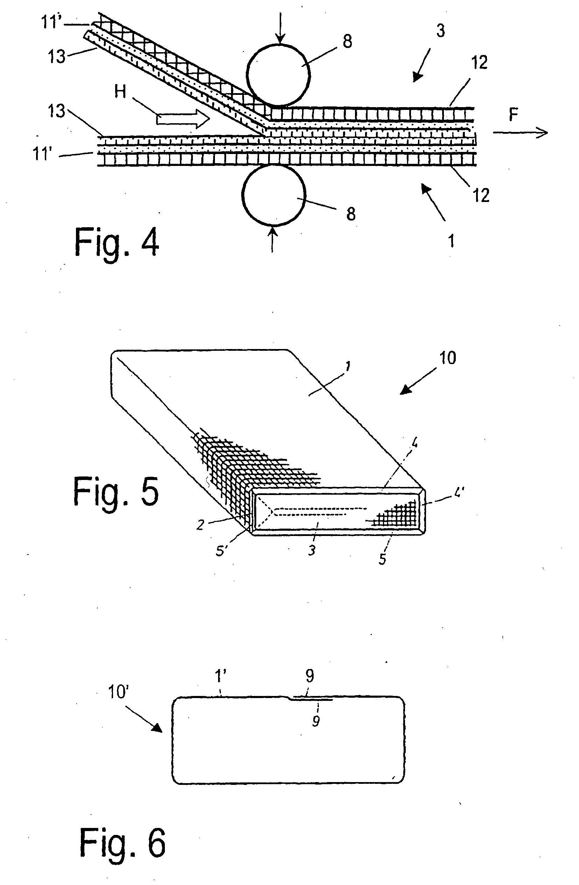

Fig. 5 zeigt einen Sack 10 mit Kastenform. Der Sack 10 besteht aus einem Sackkörper 1 aus dem oben beschriebenen 2-schichtigen oder 3-schichtigen beschichteten Gewebe 11, 11' (siehe Figuren 1 und 2). In dieser Ausführungsform ist das beschichtete Gewebe als Rundgewebe ausgeführt. Die Endflächen, d.h. Boden- und Deckfläche dieses Kastensackes werden durch Faltung von Lappen 4, 4', 5, 5' des Sackkörpers 1 gebildet. Wie gestrichelt angedeutet, überragen die Lappen 4 und 5 einander nur wenig. Zwischen den Lappen 5' und 4 bzw. 5 ist weiters ein Ventil 2 angeordnet, das aus blatt- oder schlauchförmigen Materialien wie Geweben oder Folien besteht und durch das die Befüllung des Sackes vorgenommen wird. Ist der Sack 10 befüllt, so schließt sich das Ventil 2 durch den Druck des Füllguts gegen die Endfläche. Auf die Lappen 4, 5 ist ein Deckblatt 3 aufgeschweißt, das ebenfalls aus dem erfindungsgemäßen 2-schichtigen oder 3-schichtigen beschichteten Gewebe 11, 11' besteht. Dafür wird entweder das weiter unten beschriebene Heißluftschweißverfahren oder eines der oben beschriebenen Schweißverfahren, nämlich Ultraschall-, Heizelement-, Infrarot- oder Laserstrahlschweißen vorgesehen. Das besondere Kennzeichen des Sackes 10 besteht darin, dass nach erfolgter Aufschweißung des Deckblattes 3 die Molekülketten in den Bändchen ihre Ausrichtung im Wesentlichen beibehalten, da nur die Siegelschicht 13 und gegebenenfalls die Haftschicht 14 (ganz oder teilweise) geschmolzen wird. Der Sack 10 weist daher überragende Festigkeit auf.

In Fig. 6 ist eine weitere Ausführungsform eines Sackes 10' dargestellt. Diese unterscheidet sich von der in Fig. 5 gezeigten Variante vor allem dadurch, dass als Sackkörper 1' ein Flachgewebe durch Verbinden seiner Längsränder 9, 9 mit einer Längsschweiß- oder -klebenaht zu einem Schlauch geformt wurde.

Das Heißluftschweißverfahren zum Verbinden der Endfläche des Sackkörpers 1 mit dem Deckblatt 3 ist in Fig. 4 schematisch dargestellt. In diesem Ausführungsbeispiel bestehen der Sackkörper 1 und das Deckblatt 3 aus 3-schichtigem beschichteten Gewebe 11', wie in Fig. 2 dargestellt. Das Deckblatt 3 wird dem Sackkörper 1 zugeführt, während beide in Richtung F durch ein gekühltes, gegeneinander drückendes Walzenpaar 8, 8 hindurchgezogen werden. Zwischen dem Sackkörper 1 und dem Deckblatt 3 wird Heißluft H durch eine nicht dargestellte Düse eingeblasen. Die Heißluft bewirkt ein Schmelzen der einander zugewandten Siegelschichten der beschichteten Gewebe 11', 11'. Die Temperatur der Heißluft H und die Fördergeschwindigkeit F werden so eingestellt, dass zwar die Siegelschichten 13, 13 der beiden beschichteten Geweben 11', 11' schmelzen, gegebenenfalls auch die Haftschichten 14 (siehe Fig. 2), nicht aber (bzw. nur in einem zu vernachlässigenden Ausmaß) die Bändchen der Gewebe 12, 12 Durch den Anpressdruck der beiden Walzen 8, 8, verbinden sich die geschmolzenen Siegelschichten 13, 13 und werden gleichzeitig durch die Kühlung der Walzen 8, 8 abgekühlt, so dass die Bändchen der Gewebe 12, 12 nicht geschmolzen werden.

Da somit die Bändchen nicht bzw. kaum die Orientierung ihrer Molekülketten verlieren, tritt durch den Heißluftschweißvorgang kein merklicher Festigkeitsverlust auf.

## Patentansprüche

1. Verfahren zum Verbinden von beschichteten Geweben (11, 11'), welche Gewebe (12) aus monoaxial verstreckten Polymerbändchen (12a, 12b), insbesondere Polyolefin- oder Polyesterbändchen, vorzugsweise Polypropylen- oder Polyethylenterephthalatbändchen umfassen, wobei die Gewebe (12) aus monoaxial verstreckten Polymerbändchen (12a, 12b) mit einer Siegelschicht (13) aus einem thermoplastischen Kunststoffbeschichtet sind, dessen Schmelzpunkt unter dem Kristallit-Schmelzpunkt des Materials der monoaxial verstreckten Polymerbändchen (12a, 12b) liegt, **gekennzeichnet durch** das Übereinanderlegen von zwei beschichteten Geweben (11, 11') mit einander zugewandten Siegelschichten (13) und das Erwärmen zumindest eines der beschichteten Gewebe (11, 11') von der Seite des Gewebes (12) aus monoaxial verstreckten Polymerbändchen auf eine Temperatur unter der Kristallit-Schmelztemperatur des Gewebebändchen-Materials, bis zum Schmelzen der Siegelschichten (13).

2. Verfahren nach Anspruch 1 **dadurch gekennzeichnet, dass** das Material der monoaxial verstreckten Polymerbändchen (12a, 12b) einen Kristallit-Schmelzpunkt über 120°C aufweist.

3. Verfahren nach einem der vorhergehenden Ansprüche, **dadurch gekennzeichnet, dass** die Siegelschicht (13) Polyethylen umfasst.

4. Verfahren nach einem der Ansprüche 1 bis 3, **dadurch gekennzeichnet, dass** zwischen dem Geweke (12) aus monoaxial verstreckten Polymerbändchen und der Siegelschicht (13) eine Haftschicht (14) angeordnet ist, wobei die Haftschicht (14) Polypropylen mit einem Zuschlag von Polyethylen von bis zu 40 Volums-%, vorzugsweise von bis zu 20 Volums-% umfasst.

5. Verfahren nach einem der Ansprüche 1 bis 4, **dadurch gekennzeichnet, dass** das Erwärmen des zumindest einen beschichteten Gewebes (11, 11') mittels eines Ultraschallaktuators erfolgt.

6. Verfahren nach einem der Ansprüche 1 bis 5, **dadurch gekennzeichnet, dass** das Erwärmen des zumindest einen beschichteten Gewebes (11, 11') mittels eines Heizelements erfolgt.

7. Verfahren nach Anspruch 7, **dadurch gekennzeichnet, dass** das Erwärmen des zumindest einen beschichteten Gewebes (11, 11') mittels Infrarotstrahlung erfolgt.

8. Verfahren nach einem der Anspräche 1 bis 5, **dadurch gekennzeichnet, dass** das Erwärmen des zumindest einen beschichteten Gewebes (11, 11') mittels eines Laserstrahls erfolgt.

## Claims

1. A process for bonding coated fabrics (11, 11') which comprise fabrics (12) from monoaxially drawn polymer tapes (12a, 12b), in particular polyolefin or polyester tapes, preferably polypropylene or polyethylene terephthalate tapes, wherein said fabrics (12) from monoaxially drawn polymer tapes (12a, 12b) are coated with a sealing layer (13) from a thermoplastic synthetic material the melting point of which being below the crystallite melting point of the fabric tape material of the monoaxially drawn polymer tapes (12a, 12b), **characterized by** placing two coated fabrics (11, 11') with sealing layers (13) facing each other on top of each other and heating at least one of the coated fabrics (11, 11') from the side of the fabric (12) from monoaxially drawn polymer tapes to a temperature below the crystallite melting point of the fabric tape material until the sealing layers (13) melt.

2. A process according to claim 1, **characterized in that** the fabric tape material has a crystallite melting point of above 120°C.

3. A process according to any of the preceding claims, **characterized in that** the sealing layer (13) comprises polyethylene.

4. A process according to any of claims 1 to 3, **characterized in that** an adhesive layer (14) is arranged between the fabric (12) from monoaxially drawn polymer tapes and the sealing layer (13), wherein the adhesive layer (14) comprises polypropylene with an addition of polyethylene of up to 40% by volume, preferably of up to 20% by volume.

5. A process according to any of claims 1 to 4, **characterized in that** the heating of the at least one coated fabric (11, 11') is done by means of an ultrasonic actuator.

6. A process according to any of claims 1 to 5, **characterized in that** the heating of the at least one coated fabric (11, 11') is done by means of a heating element.

7. A process according to claim 6, **characterized in that** the heating of the at least one coated fabric (11, 11') is done by means of infrared radiation.

8. A process according to any of claims 1 to 5, **characterized in that** the heating of the at least one coated fabric (11, 11') is done by means of a laser beam.

## Revendications

1. Procédé pour lier des textiles revêtus (11, 11'), lesdits textiles (12), formés en bandelettes (12a, 12b) polymères étirées de manière monoaxiale, en particulier en bandelettes de polyoléfine ou de polyester, comprenant de préférence des bandelettes de polypropylène ou de polyéthylène téréphtalate, lesdits textiles (12) en bandelettes (12a, 12b) polymères étirées de manière monoaxiale étant revêtus d'une couche de scellement (13) en matière thermoplastique dont le point de fusion est inférieur au point de fusion des cristallites du matériau des bandelettes (12a, 12b) polymères étirées de manière monoaxiale, **caractérisé en ce que** l'on pose deux textiles revêtus (11, 11') l'un sur l'autre avec leurs couches de scellement (13) tournées l'une vers l'autre, et **en ce que** l'on chauffe l'un au moins deux textiles revêtus (11, 11') depuis le côté du textile (12) en bandelettes polymères étirées de manière monoaxiale à une température au-dessous de la température de fusion des cristallites du matériau des bandelettes de tissus jusqu'à la fusion des couches de scellement (13).

2. Procédé selon la revendication 1, **caractérisé en ce que** le matériau des bandelettes (12a, 12b) polymères étirées de manière monoaxiale présente un point de fusion des cristallites au-dessus de 120°C.

3. Procédé selon l'une des revendications précédentes, **caractérisé en ce que** la couche de scellement (13) comprend du polyéthylène.

4. Procédé selon l'une des revendications 1 à 3, **caractérisé en ce qu'**une couche adhésive (14) est agencée entre le textile (12) en bandelettes de polymères étirées de manière monoaxiale et la couche de scellement (13), ladite couche adhésive (14) incluant du polypropylène avec une addition de polyéthylène jusqu'à 40 % en volume, de préférence jusqu'à 20 % en volume.

5. Procédé selon l'une des revendications 1 à 4, **caractérisé en ce que** l'échauffement dudit au moins un textile revêtu (11, 11') a lieu au moyen d'un dispositif à ultrasons.

6. Procédé selon l'une des revendications 1 à 5, **caractérisé en ce que** l'échauffement dudit au moins un textile revêtu (11, 11') a lieu au moyen d'un élément chauffant.

7. Procédé selon la revendication 6, **caractérisé en ce que** l'échauffement dudit au moins un textile revêtu (11, 11') a lieu au moyen d'un rayonnement infrarouge.

8. Procédé selon l'une des revendications 1 à 5, **caractérisé en ce que** l'échauffement dudit au moins un textile revêtu (11, 11') a lieu au moyen d'un faisceau laser.
